# EUROPÄISCHE PATENTSCHRIFT

(11) **EP 3 454 966 B1**
(45) Veröffentlichungstag und Bekanntmachung des Hinweises auf die Patenterteilung: **13.05.2020**
(21) Anmeldenummer: 17724908.3
(22) Anmeldetag: 21.04.2017
(51) Int. Cl.: B01D 39/04, B01D 39/16, B01D 39/18

(54) **FILTERMATERIAL UND FILTRATIONSANORDNUNG**
FILTER MATERIAL AND FILTER ARRANGEMENT
MATÉRIAU FILTRANT ET DISPOSITIF DE FILTRAGE

(30) Priorität: 10.05.2016 DE 102016108558; 10.05.2016 DE 202016105559 U
(43) Veröffentlichungstag der Anmeldung: 20.03.2019
(73) Patentinhaber: Pure Flow Filtersysteme GmbH, 95213 Münchberg (DE)
(72) Erfinder: KÜNZEL, Ludwig, 95194 Regnitzlosau (DE)
(74) Vertreter: Reichert & Lindner Partnerschaft Patentanwälte
(86) Internationale Anmeldenummer: PCT/IB2017/052294
(87) Internationale Veröffentlichungsnummer: WO 2017/195055

(56) Entgegenhaltungen:
- EP-A1- 2 510 992
- US-A- 3 073 735

## Beschreibung

Die Erfindung betrifft ein Filtermaterial für flüssige Medien aus mehreren einzelnen Vlieslagen, wobei das Filtermaterial aus einem oder mehreren geometrischen Filterkörpern besteht

Ferner betrifft die Erfindung eine Filtrationsanordnung für flüssige Medien. Die Filtrationsanordnung umfasst ein Filtergehäuse mit einem Zulauf für das zu filternde Medium und einen Ablauf für das gefilterte Medium.

Die deutsche Patentanmeldung DE 100 44 218 A1 offenbart die Verwendung von Polyisozyanidharzen in Filterschichten. Es sind nassfest ausgerüstete Filter, insbesondere Tiefenfilter, mit hoher Quellfähigkeit offenbart. Die Filter umfassen eine Filtermatrix aus Zellulosefasern. Die Zellulosefasern weisen an ihrer Oberfläche chemisch gebundenes Polyisozyanid auf. Die Filtermatrix umfasst ebenfalls synthetische Materialien. Die Festigkeit der offenen Filterschichten wird erfahrungsgemäß durch die Verwendung von Langfasern verbessert. Der Zellulosefilter ist größtenteils aus Langfasern hergestellt und bildet mit diesen ein Faservlies.

Das deutsche Gebrauchsmuster DE 201 06 073 U1 offenbart einen mechanisch wirksamen Filtereinsatz für einen Flüssigkeitsfilter, insbesondere einen Wasserfilter für Schwimmbecken, Schwimmbäder, Teiche oder dergleichen. Der Wasserfilter ist in einem vorgegebenen Strömungsweg angeordnet. Der Filtereinsatz weist langfaserige Kunststoffborsten auf, die in den Strömungsweg hineinragen und diesen vorzugsweise vollflächig abdecken.

Die deutsche Patentschrift DE 10 2007 027 299 B4 offenbart einen Filter aus einem mehrlagigen Filtermedium, der mindestens eine Stützvliesschicht aus synthetischen Polymerfasern aufweist. Auf mindestens einer Seite des Stützvlieses ist mindestens eine Filterschicht und auf der der Stützschicht abgewandten Seite der Filterschicht ist mindestens eine Deckschicht angebracht. Das Vlies besteht aus Filamenten, d. h. unendlich langen Fasern oder aus Stapelfasern. Die Vliese, die vorzugsweise Nassvliesstoffe, Spinnvliesstoffe oder trocken gelegte Vliesstoffe sind, werden mittels thermischer und/oder chemischer Bindung und/oder mechanischer Verfestigung verfestigt.

Die deutsche Patentanmeldung DE 3 623 786 A1 offenbart ein Verfahren zur Herstellung von Rußfiltern. Für die Rußfilter werden poröse Fasermatten aus gewickelten oder losen, zu einem filz- oder watteartigen Gebilde zusammengebrachten Fasern erzeugt. Die Fasern werden mit einem verbindenden Mittel in Kontakt gebracht, wobei die Fasern der Fasermatte mit dem Mittel beschichtet werden, damit die Fasern nahezu ausschließlich in den sich kreuzenden Bereichen durch das Beschichtungsmaterial miteinander verbunden werden.

Die deutsche Patentanmeldung DE 40 15 505 A1 offenbart ein geotextiles Filtermaterial. Dieses Filtermaterial wird in geotechnischem Gebiet verwendet und muss flüssigkeitsdurchlässig sein. Aus synthetischen Endlos- und/oder Stapelfasern wird ein Vliesstoff hergestellt. Ferner kann der Vliesstoff mit weiterem Textilmaterial verbunden werden.

Die deutsche Patentanmeldung DE 102 27 246 A1 betrifft eine aerodynamisch gebildete Komposition und ein Vlies für Filter (Luftfilter, Flüssigkeitsfilter), etc. Die Vliesbindung kann aerodynamisch auf die Art und Weise erfolgen, dass man die verschiedenen Fasern einfach zusammenmischt und einem Luftstrom aussetzt, der die Fasern zu einer Fläche zusammenmischt. Anschließend folgen weitere Schritte, wie erhitzen, anschmelzen, etc.

Die europäische Patentanmeldung EP 25 10 992 A1 offenbart ein Filtermaterial zum Reinigen eines Fluids. Das Filtermaterial umfasst ein Faservlies, das aus einer Vielzahl synthetischer Fasern gebildet ist. Das Filtermaterial ist vergleichsweise grobfaserig und weist besondere Oberflächeneigenschaften sowie eine geringe Dichte auf. Die Bindung zwischen den einzelnen Fasern des Faservlieses wird durch eine mechanische Behandlung der Fasern verbessert. Die mechanische Behandlung bildet Kerben in den Fasern aus.

Das U.S. Patent US 4,910,064 A offenbart eine textilartige, nicht gewebte, sondern gesponnene flächige Endlos-Stoffbahn aus einer Vielzahl von Filamenten (Endlosfasern) aus thermoplastischen Polymeren. Diese Stoffbahn stellt eine einzelne bzw. einzige Vlieslage dar, jedoch keinen Filter. Die Endlosfasern sind zu einem definierten Grad mit anderen Endlosfasern stoffschlüssig miteinander verbunden.

Die europäische Patentanmeldung EP 1 277 865 A1 offenbart ein Filtermaterial (Verbund aus Vliesstoffen) für flüssige Medien. Das Filtermaterial umfasst einen einzigen geometrischen Filterkörper, nämlich den verschweißten Verbund aus Vliesstoffen mit Wellungen bzw. Korrugationen und einem inneren geschrumpften Faserflächengebilde. Das Filtermaterial ist aus mehreren einzelnen Vlieslagen aufgebaut. Das innere geschrumpfte Faserflächengebilde kann ein Vliesstoff sein und eine Vielzahl von Filamenten (Endlosfasern) umfassen, die zu einem definierten Grad mit anderen Endlosfasern stoffschlüssig miteinander verbunden sind. Die einzelnen Lagen sind laminiert und bilden dadurch eine Verbundvlieslage mit einer Oberseite und Unterseite.

Bisherige Filtermaterialien, die auf Polymeren basieren, bzw. die Verwendung dieser Filtermaterialien in Filtrationsanordnungen decken weniger Anwendungsbereiche ab, als das erfindungsgemäße Filtermaterial in Verbindung mit der erfindungsgemäßen Filtrationsanordnung. Ferner ist das Filtermaterial des Standes der Technik nicht chemieresistent im Vergleich zum Filtermaterial der gegenwärtigen Erfindung. Hinzu kommt, dass bei bisherigen polymeren Filtermaterialien ein Flockungsmittel notwendig ist, um den gewünschten Filtereffekt zu erreichen. Hinzu kommt, dass die Trennschärfe des Filtermaterials des Standes der Technik nicht so klein ist, wie beim Filtermaterial gemäß der Erfindung. Ferner ist auch bei dem Filtermaterial des Standes der Technik die Gefahr der Verklumpung oder Verkrustung gegeben.

Der Erfindung liegt die Aufgabe zugrunde, ein Filtermaterial für flüssige Medien zu schaffen, das die Filtration von flüssigen Medien mit geringen Kosten und reduziertem Aufwand ermöglicht und dabei mit einer hohen Effizienz das zu filternde flüssige Medium behandelt.

Die obige Aufgabe wird durch ein Filtermaterial für flüssige Medien gelöst, das die Merkmale des Anspruchs 1 umfasst.

Es ist ferner Aufgabe der Erfindung, eine Filtrationsanordnung für flüssige Medien zu schaffen, die die Filterung des flüssigen Mediums kostengünstig durchführt und dabei einen geringen Zeitaufwand benötigt. Ebenso soll die Filterung des flüssigen Mediums zuverlässig durchgeführt werden und die Servicekosten für die Filteranordnung sollen erheblich reduziert werden.

Diese Aufgabe wird durch eine Filtrationsanordnung für flüssige Medien gelöst, die die Merkmale des Anspruchs 9 umfasst.

Das erfindungsgemäße Filtermaterial für flüssige Medien zeichnet sich dadurch aus, dass mehrere einzelne Vlieslagen übereinandergelegt sind, wobei jede Vlieslage eine Vielzahl von Endlosfasern umfasst. Die Endlosfasern sind innerhalb einer Vlieslage und ebenfalls mit den benachbarten Vlieslagen jeweils in einem gewissen Umfang untereinander stoffschlüssig miteinander verbunden. Die Endlosfasern benachbarter Vlieslagen greifen hierzu von Vlieslage in Vlieslage, um so die stoffschlüssige Verbindung auch zwischen den einzelnen benachbarten Vlieslagen herzustellen. Durch die Verbindung der einzelnen benachbarten Vlieslagen entsteht eine Verbundvlieslage mit einer Oberseite und einer Unterseite. Das Filtermaterial gemäß der Erfindung besteht aus geometrischen Filterkörpern, die aus der Verbundvlieslage ausgeschnitten werden, wobei diese ausgeschnittenen Filterkörper die Oberseite und die Unterseite der Verbundvlieslage aufweisen.

Durch das Verbinden der Endlosfasern innerhalb einer Vlieslage untereinander oder durch das Verbinden der Endlosfasern mit den Endlosfasern benachbarter Vlieslagen, können durch die Anzahl der Verbindungen zwischen den Endlosfasern pro Volumeneinheit die mechanischen Eigenschaften innerhalb einer Vlieslage und zwischen den Vlieslagen untereinander eingestellt werden. Der Ausdruck "Anzahl der Verbindungen" kann als "in einem gewissen Umfang" bzw. "zu einem gewissen Grad verstanden werden.

Die geschnittenen geometrischen Filterkörper sind elastisch reversibel. Ebenso sind die geschnittenen geometrischen Filterkörper formstabil. Die Endlosfasern, aus denen die einzelnen Vlieslagen hergestellt sind, sind Polyesterfasern. Gemäß einer möglichen Ausführungsform der Erfindung können die Endlosfasern der Verbundvlieslage mit Aktivkohle versetzt sein. Somit ist der gesamte Filterkörper mit Aktivkohle versetzt.

Da die Filterkörper formstabil und reversibel elastisch sind, können die Filterkörper in einem Behältnis aufbewahrt werden, das evakuiert und deformiert ist. Die Filterkörper werden dadurch komprimiert, so dass die Lagerkosten bzw. das Transportvolumen erheblich reduziert ist. Vor der Verwendung der Filterkörper in einer Filtrationsanordnung wird ein Druckausgleich des Behältnisses mit der Umgebung durchgeführt. Dadurch nehmen die Filterkörper ihre ursprüngliche Form und Größe wieder an, welche sie zum Zeitpunkt des Ausschneidens der geometrischen Filterkörper aus der Verbundvlieslage hatten.

Eine mögliche Ausführungsform eines Behältnisses, mit dem die geometrischen Filterkörper transportiert und/oder gelagert werden können, besteht aus einem deformierbaren Material, in dem eine Absaugöffnung vorgesehen ist. Mit einem Verschluss kann das Behältnis verschlossen werden. Ferner ist bei einer weiteren Möglichkeit für eine Verpackung der Filtermaterialien denkbar, dass der Beutel keine Absaugöffnung aufweist, sondern nur gepresst wird. Der Beutel wird beim Verpacken auf ein Minimum gepresst und am Ende ist ein gas- bzw. vakuumdichter Verschluss vorgesehen, wodurch der gepresste bzw. komprimierte Zustand des Beutels beibehalten wird. Ebenso besteht die Möglichkeit, dass das Filtermaterial gepresst in einem Karton verpackt wird.

Bevorzugt sind die Endlosfasern aus Polyester. Das Filtermaterial besteht aus 60% bis 90% Voll- oder Hohlfasern und aus bis zu 40% bis 10% aus Schmelz-Fasern. Die Querschnittsform der Endlosfasern ist rund oder oval. Die Endlosfasern des Filtermaterials besitzen eine Faserstärke von ungefähr 30µm bis 50 µm. Bevorzugt haben die Endlosfasern eine Faserstärke von ungefähr 40 µm. Das Filtermaterial besitzt ein Flächengewicht von 250 - 1800 Gramm/Quadratmeter.

Ferner betrifft die Erfindung eine Filtrationsanordnung für flüssige Medien, die ein Filtergehäuse mit einem Zulauf für das zu filternde Medium und einen Ablauf für das gefilterte Medium umfasst. Für die Filterung des flüssigen Mediums ist im Filtergehäuse mindestens eine Filterlage vorgesehen, die aus mindestens einer Verbundvlieslage eines aus dem Filtermaterial geschnittenen geometrischen Formkörpers besteht. Der geometrische Filterkörper hat dabei eine Oberseite und eine Unterseite, die der der Verbundvlieslage entspricht. Der Zulauf der Filtrationsanordnung für das zu filternde Medium ist auf die mindestens eine Filterlage gerichtet. Der Ablauf für das gefilterte Medium folgt auf die mindestens eine Filterlage in der Filtrationsanordnung.

Gemäß einer möglichen Ausführungsform besteht die mindestens eine Filterlage aus einem einzigen Filterkörper. Die Form des Filterkörpers ist dabei an die innere Form des Filtergehäuses angepasst, was durch geeignetes Ausschneiden aus der Verbundvlieslage erreicht wird. Der einzige Filterkörper besitzt dabei die Oberseite und die Unterseite der Verbundvlieslage.

Gemäß einer weiteren Ausführungsform der Erfindung kann die Filterlage in der Filtrationsanordnung aus einer Vielzahl von einzelnen geometrischen Filterkörpern bestehen. Jeder der Filterkörper ist dabei aus der Verbundvlieslage geschnitten und besitzt eine kubische Form. Die kubische Form weist die Oberseite und die Unterseite der Verbundvlieslage auf.

Gemäß einer weiteren Ausführungsform kann die Filteranordnung mehrere Filterlagen aufweisen, wobei mindestens eine aus einer Verbundvlieslage eines aus einem Filtermaterial geschnittenen Filterkörpers besteht. Ebenso ist eine Ausführungsform denkbar, das im Filtergehäuse mindestens eine Filterlage aus einzelnen kubischen Filterkörpern und mindestens eine Filterlage aus einem einzigen Filterkörper besteht.

Gemäß einer weiteren Ausführungsform der Erfindung kann im Filtergehäuse mindestens eine Filterlage aus einzelnen kubischen Filterkörpern oder mindestens eine Filterlage aus einem einzigen Filterkörper bestehen, wobei Aktivkohle an mindestens einer Vlieslage der Verbundvlieslage gebunden ist. Mit dem erfindungsgemäßen Filtermaterial sind eine einfache Installation und eine effektive Leistung der Filtration gegeben. Mit dem in das Filtergehäuse eingeleiteten Wasser bzw. flüssigem Medium verdichten sich die einzelnen Segmente der geometrischen Formkörper des Filtermaterials. Durch die Verdichtung ergibt sich eine durchgehende Filtermasse. In der Filtermasse bleiben Schmutzpartikel und selbst feinste Schwebstoffe hängen. Das Wasser durchströmt nahezu ohne Widerstand das Filtermaterial und wird hervorragend gereinigt zum Beispiel wieder in das Becken zurückgeleitet.

Ebenso ist mit dem erfindungsgemäßen Filtermaterial bzw. der geometrischen Filterkörper in Verbindung mit der Filtrationsanordnung auch eine Rückspülung möglich. Dies bedeutet, dass das flüssige Medium bzw. Wasser in umgekehrter Fließrichtung zurück in das Filtergehäuse geleitet wird. Durch die entgegengesetzte Strömung des flüssigen Mediums trennen sich die einzelnen Segmente der geometrischen Formkörper und geben einige der Schmutzpartikel frei, die dann aus der Filtrationsanordnung ausgespült werden können. Das Filtermaterial kann bedingt rückgespült werden, so dass eben nur einige der Schmutzpartikel aus der Filtrationsanordnung bzw. aus dem Filtermaterial ausgespült werden. Das bedeutet, dass große Schmutzpartikel auf der Oberseite der geometrischen Formkörper bzw. des Filtermaterials durch die entgegengesetzte Strömung des flüssigen Mediums vom Filtermaterial getrennt werden. Die kleineren Schmutzpartikel im Inneren der Formkörper bzw. des Filtermaterials bleiben dort anhaften. Die Filtrationsanordnung ist ein Tiefenfilter und die Partikel bleiben im Innern haften bzw. bestehen.

Mit dem erfindungsgemäßen Filtermaterial bzw. der erfindungsgemäßen Filtrationsanordnung ergeben sich Vorteile hinsichtlich der Kosten für die Filtration. So kann z. B. Energie eingespart werden, da das Filtermaterial eine hohe Durchflussrate erlaubt, so dass die Pumpen geringer ausgelegt werden können. Aufgrund der hohen Abscheiderate kann auf Flockungsmittel weitgehend verzichtet werden. Ferner hat das Filtermaterial eine hohe Schmutzaufnahme-Kapazität und eine lange Nutzungsdauer. Ebenso resultieren aus der erfindungsgemäßen Filtrationsanordnung verringerte Reparatur- und Wartungskosten, Anleitungen, Filterstellen, Filterkerze, Absperrschiebung, Dichtungen usw. Ebenso fallen keine Transport- und Entsorgungskosten an. Ferner sind weniger Rückspülungen erforderlich, wodurch sich der Wasserverlust und der Energieaufwand für die Wiedererwärmung des zugeführten Frischwassers reduziert.

Die Anlieferung und Lagerung der geometrischen Filterelemente benötigt einen geringen Platzbedarf. Ebenso kann der Austausch des Filtermaterials im Filtergehäuse einfach und schnell vorgenommen werden, da das Filtermaterial ein sehr geringes Gewicht hat. Durch den geringen Widerstand des Filtermaterials wird das zu filternde flüssige Medium in der gleichen Zeit schneller und öfter gefiltert, als bei herkömmlichen Filtermaterialien.

Weitere Vorteile und vorteilhafte Ausgestaltungen der Erfindung sind Gegenstand der nachfolgenden Figuren, sowie deren Beschreibungsteile.

Es zeigen im Einzelnen:
- **Figur 1**: eine schematische Schnittansicht durch eine Verbundvlieslage, gemäß einer Ausführungsform der Erfindung;
- **Figur 2**: eine schematische Ansicht einer Ausführungsform eines geometrischen Formkörpers, der aus der Verbundvlieslage ausgeschnitten worden ist;
- **Figur 3**: eine Schnittansicht einer möglichen Ausführungsform einer Filtrationsanordnung, bei der das Filtergehäuse vollkommen mit einzelnen geometrischen Filterkörpern befüllt ist;
- **Figur 4**: zeigt die Situation, bei der das in Figur 3 dargestellte Filtergehäuse im Filtermodus des flüssigen Mediums ist;
- **Figur 5**: eine vergrößerte Ansicht des Filtermaterials mit der Einlagerung von Schmutzpartikeln;
- **Figur 6**: eine schematische Ansicht des Filtergehäuses, bei der der Rückspülvorgang gerade begonnen hat;
- **Figur 7**: eine schematische Ansicht des Filtergehäuses, bei der der Rückspulvorgang annähernd abgeschlossen ist;
- **Figur 8**: eine Teilansicht eines aufgeschnittenen Filtergehäuses, in dem zwei geometrische Filterkörper sitzen, die an die Form des Filtergehäuses angepasst sind;
- **Figur 9**: eine schematische Ansicht einer möglichen Ausführungsform des Aufbaus der verschiedenen Filterschichten im Innern eines Filtergehäuses;
- **Figur 10**: eine schematische Ansicht eines Behältnisses, das mit einer Vielzahl von geometrischen Formkörpern des Filtermaterials gefüllt ist; und
- **Figur 11**: eine schematische Ansicht, bei der das Behältnis evakuiert ist.

Für gleiche oder gleich wirkende Elemente der Erfindung werden identische Bezugszeichen verwendet. Es ist für einen Fachmann selbstverständlich, dass die in der Beschreibung vorgestellten Ausführungsformen der Verbundvlieslage und der aus der Verbundvlieslage ausgeschnittenen Formkörper keine Beschränkung der Erfindung darstellen. Ebenso kann für die Ausgestaltung der Filtrationsanordnung eine Vielzahl von Filterlagen verwendet werden, die unterschiedliche Ausgestaltungen haben können. So können z. B. ausschließlich Filterlagen vorgesehen sein, die aus einzelnen geometrischen Filterkörpern bestehen. Die Kombination der Filterlagen und deren Ausgestaltung richten sich im Wesentlichen nach dem zu lösenden Filtrationsproblem.

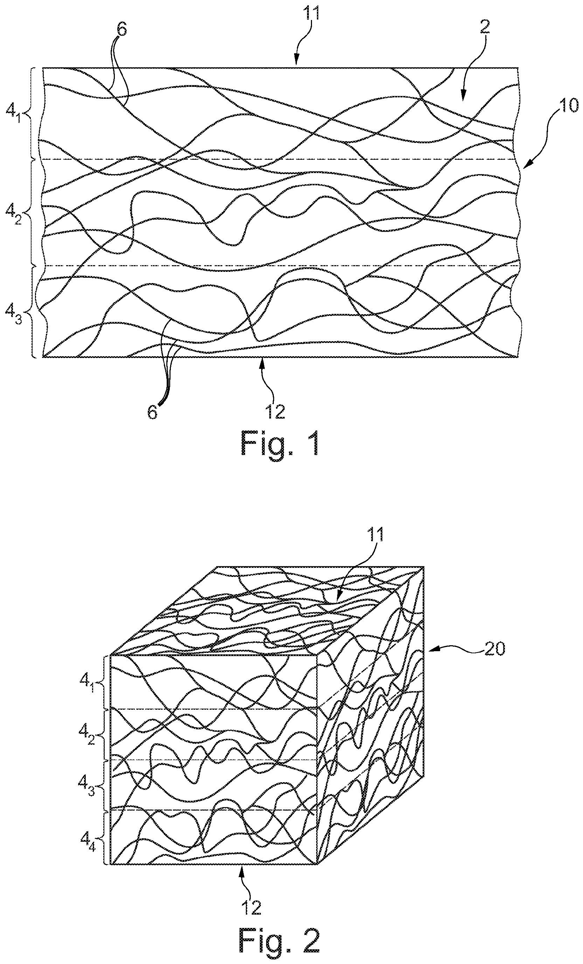

**Figur 1** zeigt eine schematische Ansicht einer Verbundvlieslage 10. Die Verbundvlieslage 10 besteht in der hier gezeigten Darstellung aus drei einzelnen Vlieslagen 4₁, 4₂ und 4₃. Es ist für einen Fachmann selbstverständlich, dass die hier gewählte Darstellung der Verbundvlieslage 10 nicht als Beschränkung der Erfindung aufgefasst werden kann. Die Verbundvlieslage 10 kann, je nach Anforderung an die mechanischen Eigenschaften, mit einer beliebigen Anzahl an Vlieslagen 4₁, 4₂, ..., 4_{N} ausgeführt werden. Die einzelnen Vlieslagen 4₁, 4₂, ..., 4_{N} besitzen eine Vielzahl von Endlosfasern 6, die auch auf benachbarte Vlieslagen 4₁, 4₂, ..., 4_{N} übergreifen. Die Endlosfasern 6 in den einzelnen Vlieslagen 4₁, 4₂, ..., 4_{N} und die Endlosfasern 6, die auf benachbarte Vlieslagen übergreifen, sind in einem gewissen Umfang (Anzahl der Verbindungen der Endlosfasern 6 pro Volumeneinheit) stoffschlüssig miteinander verbunden.

Die Verbundvlieslage 10 hat eine Oberseite 11 und eine Unterseite 12 ausgebildet.

Für die Filtration von flüssigem Medium werden aus der Verbundvlieslage 10 einzelne geometrische Filterkörper 20 ausgeschnitten (siehe Figur 2). Entsprechend der Ausgestaltung der Verbundvlieslage 10 mit den einzelnen Vlieslagen 4₁, 4₂, ..., 4_{N} besitzt auch der geometrische Filterkörper 20 die entsprechende Anzahl von Vlieslagen 4₁, 4₂, ..., 4_{N}. Ebenso weist der geometrische Filterkörper 20 die Oberseite 11 und die Unterseite 12 der Verbundvlieslage 10 auf, aus der er hergestellt bzw. ausgeschnitten worden ist. Besonderer Vorteil des erfindungsgemäßen Filtermaterials und der daraus ausgeschnittenen Filterkörper 20 ist die Formstabilität der Filterkörper 20. Auch hier sei erwähnt, dass die dargestellte geometrische Form des Filterkörpers 20 nicht als eine Beschränkung der Erfindung aufgefasst werden kann. Aus der Verbundvlieslage 10 können Filterkörper 20 jeglicher Form und Größe geschnitten werden. Einzige Bedingung ist, dass die ausgeschnittenen Filterkörper 20 auch die Oberseite 11 und die Unterseite 12 der Verbundvlieslage 10 aufweisen müssen.

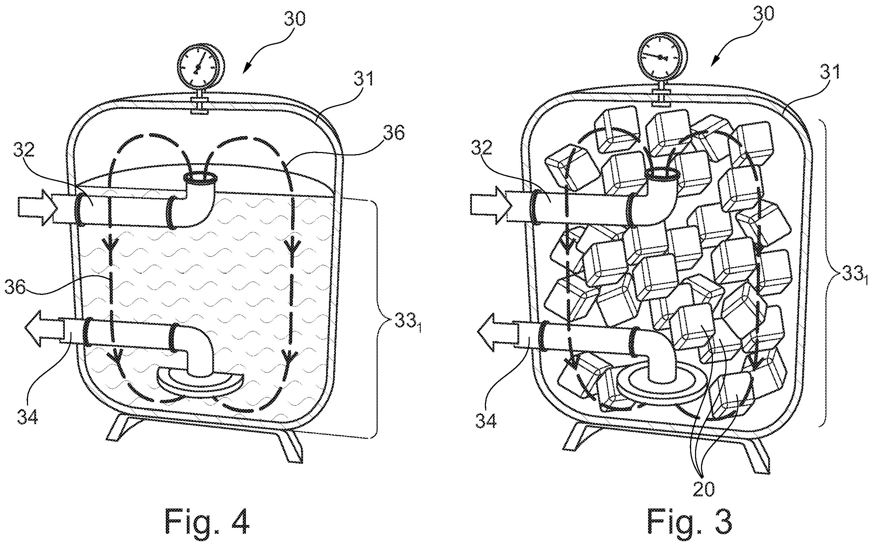

**Figur 3** zeigt eine Schnittansicht einer Filtrationsanordnung 30, die komplett geschlossen ist. Im Filtergehäuse 31 der Filtrationsanordnung 30 ist bei der hier dargestellten Ausführungsform lediglich eine Filterlage 33₁ für die Filterung des flüssigen Mediums vorgesehen. Die Filterlage 33₁ umfasst dabei eine Vielzahl geometrischer Filterkörper 20, die eine kubische Form besitzen. Das zu filternde flüssige Medium wird über einen Zulauf 32 in das Filtergehäuse 31 geleitet. Über einen Ablauf 34 tritt das gefilterte flüssige Medium wieder aus dem Filtergehäuse 31 aus.

Bei der in **Figur 4** gezeigten Darstellung ist über den Zulauf 32 nun so viel zu filterndes flüssiges Medium zugeführt, dass dadurch die einzelnen Filterkörper 20 zu einer einzigen, im Wesentlichen homogenen Filtermasse zusammengedrückt worden sind. Die daraus resultierende Filterlage 33₁ wird von dem zu filternden Medium entlang der Trajektorien 36 durchströmt. Das gefilterte flüssige Medium tritt, wie bereits in Figur 3 erwähnt, durch den Ablauf 34 aus und kann einer weiteren Verwendung (z. B. Schwimmbecken) zugeführt werden.

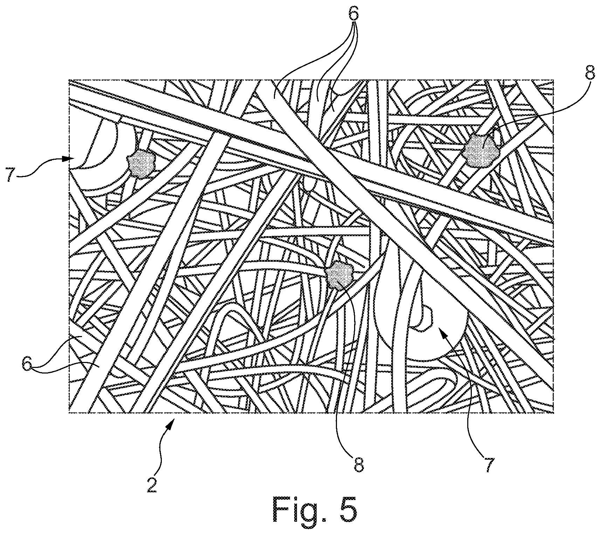

**Figur 5** zeigt eine vergrößerte Ansicht des Filtermaterials 2, bei der die einzelnen Endlosfasern 6 in ihrer wirren Lage im Filtermaterial 2 zu erkennen sind. Das flüssige Medium 7 tritt zwischen den Endlosfasern 6 hindurch. Dabei werden Partikel 8 abgegeben und bleiben an den Endlosfasern 6 haften. Durch diesen Effekt tritt die Reinigung des flüssigen Mediums 7 ein.

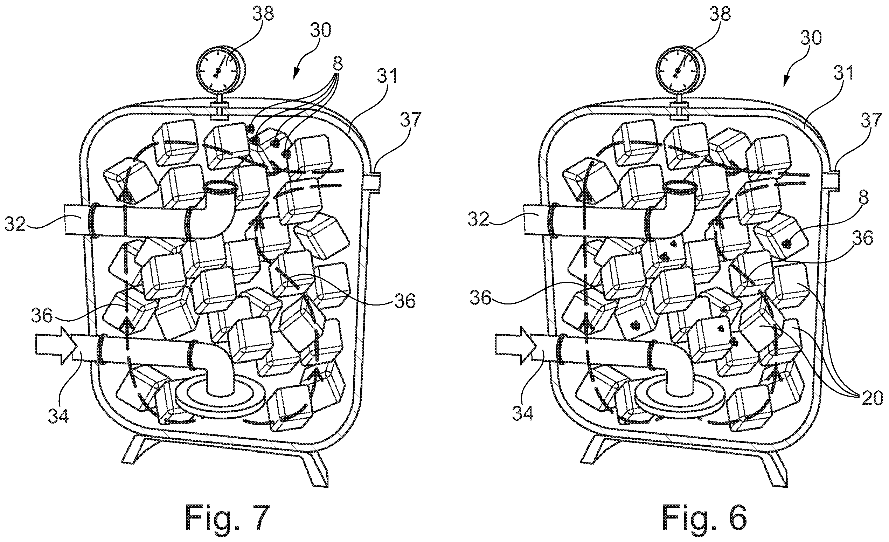

Die **Figuren 6 und 7** zeigen die Situation eines Rückspülvorgangs, bei dem Partikel 8 in den einzelnen geometrischen Filterkörpern 20 ausgespült werden können. Bei der in Figur 6 gezeigten Darstellung beginnt der Rückspülvorgang gerade. Hier wird durch den Ablauf 34 sauberes flüssiges Medium eingeleitet. Dadurch lockern sich die einzelnen geometrischen Filterkörper 20 auf und trennen sich und füllen im Wesentlichen das gesamte Innere des Filtergehäuses 31 aus. Das über den Ablauf 34 zugeleitete flüssige Medium bewegt sich entlang der Trajektorien 36 zu einem Überlauf 37. Bei der in Figur 7 gezeigten Darstellung sind bereits durch die Flüssigkeitsströmung im Filtergehäuse 31 die Partikel 8 in den Bereich des Überlaufs 37 verbracht bzw. bereits durch den Überlauf 37 ausgespült. Das mit dem Filtergehäuse 31 verbundene Manometer 38 dient dazu, den Druck innerhalb des Filtergehäuses 31 zu kontrollieren. Bei der in den Figuren 3 und 4 und 6 und 7 dargestellten Ausführungsformen des Filtergehäuses 31 handelt es sich um ein Filtergehäuse 31, das mit Überdruck arbeitet.

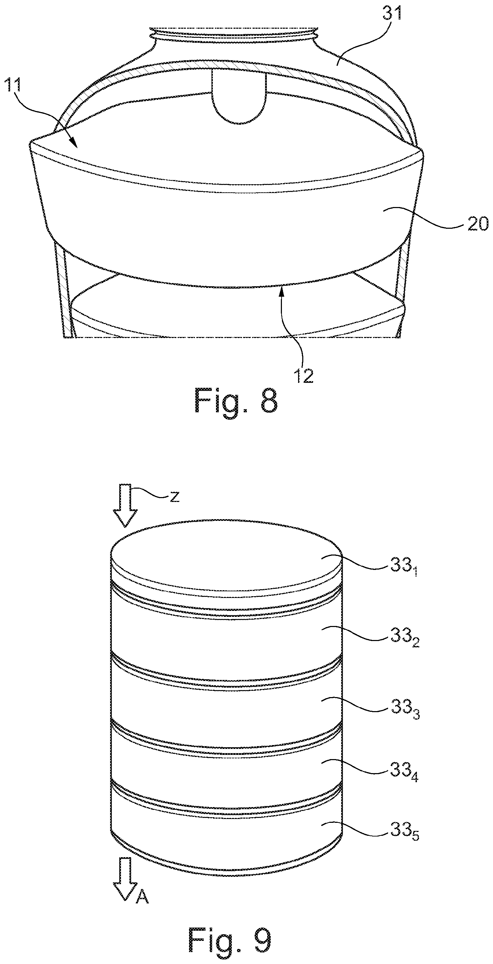

**Figur** 8 zeigt eine Teilansicht eines aufgeschnittenen Filtergehäuses 31, bei der im Filtergehäuse 31 der geometrische Filterkörper 20 an die innere Form des Filtergehäuses 31 angepasst ist. Bei der hier dargestellten Ausführungsform ist eben der geometrische Filterkörper 20 derart aus der Verbundvlieslage 10 ausgeschnitten, dass er an die innere Form des Filtergehäuses 31 angepasst ist. Wie bereits in den vorangehenden Ausführungen beschrieben, besitzt der geometrische Filterkörper 20 auch die Oberseite 11 und die Unterseite 12 der Verbundvlieslage 10.

**Figur 9** zeigt eine mögliche Ausführungsform des Aufbaus verschiedener Filterlagen 33₁, 33₂, ..., 33_{K}, die für die Filterung des flüssigen Mediums in einer Filteranordnung (nicht dargestellt) verantwortlich sind. Das flüssige Medium wird in Richtung der Zugabe Z auf die oberste Filterlage 33₁ aufgegeben. Die Abgabe A des gefilterten flüssigen Mediums erfolgt durch die unterste Filterlage 33₅ Es ist selbstverständlich, dass die hier beschriebenen fünf Filterlagen 33₁, 33₂, 33₃, 33₄ und 33₅ nicht als Beschränkung der Erfindung aufgefasst werden können. Selbstverständlich können beliebige Kombinationen von Filterlagen 33₁, 33₂, ..., 33_{K} für die Filtration von flüssigem Medium eingesetzt werden. Die Zusammenstellung der einzelnen Filterlagen 33₁, 33₂, ..., 33₅ kann an die jeweilige Filtrationsanforderung angepasst werden. Das zu filternde Medium wird auf die oberste Filterlage 33₁ aufgegeben. Die oberste Filterlage 33₁ kann z. B. ein Filtergitter sein. Das Filtergitter kann dabei aus Plastik oder rostfreiem Stahl bestehen. Auf die oberste Filterlage 33₁ folgt eine weitere Filterlage 33₂, die aus einzelnen mehreren kubischen Filterkörpern 20 besteht. In der nächsten Filterlage 33₂ kann z. B. eine komplette Scheibe bzw. ein Filterkörper 20 vorgesehen sein, der an das Innere eines Filtergehäuses (nicht dargestellt) angepasst ist. In der nächsten Filterlage 33₄ kann ein weiterer, an das Innere des Filtergehäuses 31 angepasster Filterkörper 20 vorgesehen sein. Bei diesem Filterkörper 20 ist mindestens eine Vlieslage (nicht dargestellt) mit Aktivkohle versehen. Die unterste Filterlage 33₅ kann wiederum ein Filtergewebe sein, das eine größere Feinheit aufweist, als das Filtergewebe der obersten Filterlage 33₁ Das Filtergitter der untersten Filterlage 33₅ kann aus Kunststoff oder rostfreiem Stahl sein.

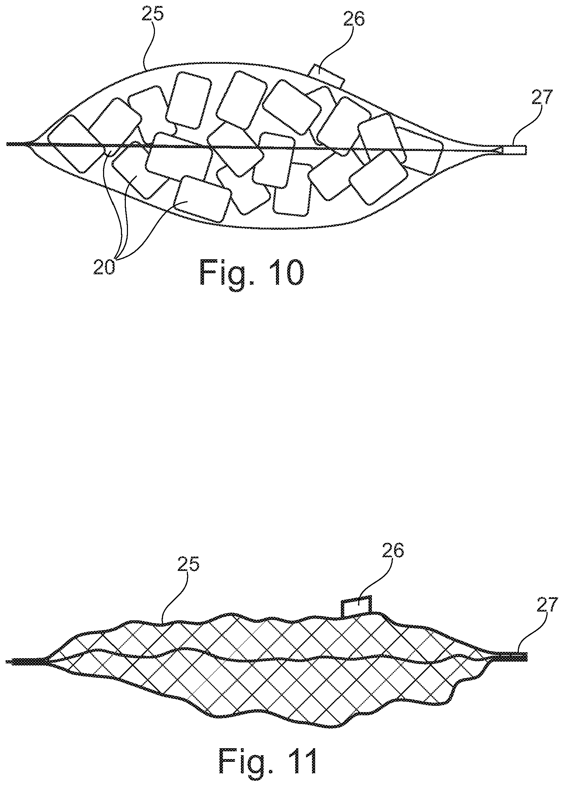

**Figur 10** zeigt eine mögliche Ausführungsform eines Behältnisses 25, mit dem die geometrischen Filterkörper 20 transportiert und/oder gelagert werden können. Das Behältnis 25 besteht aus einem deformierbaren Material, in dem eine Absaugöffnung 26 vorgesehen ist. Mit einem Verschluss 27 kann das Behältnis 25 verschlossen werden. Andere mögliche Ausführungsformen der Verpackung für die Filterkörper 20 sind im einleitenden Teil der Beschreibung erwähnt.

**Figur 11** zeigt dabei die Situation, dass aus dem Behältnis 25 die Luft über die Absaugöffnung 26 abgesaugt worden ist. Dadurch werden die Formkörper 20 im Inneren des Behältnisses 25 zusammengedrückt und man erhält ein deformiertes Behältnis, das ein wesentlich geringeres Volumen aufweist, als das in Figur 10 dargestellte Behältnis 25.

### Bezugszeichenliste

- 2: Filtermaterial
- 4₁,4₂, ..., 4_{N}: Vlieslage
- 6: Endlosfasern
- 7: flüssiges Medium
- 8: Partikel
- 10: Verbundvlieslage
- 11: Oberseite
- 12: Unterseite
- 20: geometrischer Filterkörper
- 25: Behältnis
- 26: Absaugöffnung
- 27: Verschluss
- 30: Filtrationsanordnung
- 31: Filtergehäuse
- 32: Zulauf
- 33₁, 33₂,..., 33_{K}: Filterlage
- 34: Ablauf
- 36: Trajektorien
- 37: Überlauf
- 38: Manometer
- A: Abgabe
- Z: Zugabe

## Patentansprüche

1. Filtermaterial (2) für flüssige Medien (7), wobei das Filtermaterial (2) aus einem oder mehreren geometrischen Filterkörpern (20) besteht,
**dadurch gekennzeichnet, dass**
das Filtermaterial (2) aus mehreren einzelnen Vlieslagen (4₁, 4₂, ..., 4_{N}) aufgebaut ist, wobei jede Vlieslage (4₁,4₂, ..., 4_{N}) eine Vielzahl von Endlosfasern (6) umfasst, die in gewissem Umfang mit anderen Endlosfasern (6) stoffschlüssig miteinander verbunden sind und wobei Endlosfasern (6) einer Vlieslage (4₁, 4₂, ..., 4_{N}) in benachbarte Vlieslagen (4₁, 4₂, ..., 4_{N}) greifen und ebenfalls in gewissem Umfang mit den Endlosfasern (6) der benachbarten Vlieslagen (4₁, 4₂, ..., 4_{N}) verbunden sind und eine Verbundvlieslage (10) mit einer Oberseite (11) und Unterseite (12) bilden,
wobei die geometrischen Filterkörper (20) aus der Verbundvlieslage (10) geschnitten und separiert sind und die Oberseite (11) und Unterseite (12) der Verbundvlieslage (10) aufweisen.

2. Filtermaterial (2) nach Anspruch 1, wobei die geschnittenen geometrischen Filterkörper (20) derart elastisch reversibel und formstabil sind, dass die Filterkörper (20) komprimiert in einem evakuier- und deformierbaren Behältnis (25) lagerbar sind und die Filterkörper (20) nach einem Druckausgleich des Behältnisses (25) mit der Umgebung die Form wieder annehmen, die der Form und Größe der aus der Verbundvlieslage (10) geschnittenen geometrischen Filterkörper (20) entspricht.

3. Filtermaterial (2) nach einem der vorangehenden Ansprüche, wobei die Endlosfasern (6) aus Polyester sind.

4. Filtermaterial (2) nach Anspruch 3, wobei die Endlosfasern (6) zu 60% bis 90% aus Voll- oder Hohlfasern und zu 40% bis 10% aus Schmelz-Fasern bestehen.

5. Filtermaterial (2) nach einem der vorangehenden Ansprüche, wobei die Endlosfasern (6) des Filtermaterials (2) eine Faserstärke von ungefähr 40 µm besitzen.

6. Filtermaterial (2) nach einem der vorangehenden Ansprüche, wobei die Endlosfasern (6) eine runde und ovale Querschnittsform besitzen.

7. Filtermaterial (2) nach einem der vorangehenden Ansprüche, wobei das Filtermaterial (2) ein Flächengewicht von 250 - 1800 Gramm/Quadratmeter besitzt.

8. Filtermaterial (2) nach einem der vorangehenden Ansprüche, wobei die Endlosfasern (6) aller Vlieslagen (4₁, 4₂, ..., 4_{N}) der Verbundvlieslage (10) mit Aktivkohle versetzt sind.

9. Filtrationsanordnung (30) für flüssige Medien (7), umfassend ein Filtergehäuse (31) mit einem Zulauf (32) für das zu filternde Medium (7) und einem Ablauf (34) für das gefilterte Medium (7), **dadurch gekennzeichnet, dass** im Filtergehäuse (31) mindestens eine Filterlage (33₁, 33₂,..., 33_{K}) mindestens eines aus einer Verbundvlieslage (10) eines Filtermaterials (2) nach einem der Ansprüche 1 bis 8 geschnittenen geometrischen Filterkörpers (20) vorgesehen ist, wobei der Zulauf (32) für das zu filternde Medium (7) auf die mindestens eine Filterlage (33₁, 33₂,..., 33_{K}) gerichtet ist und der Ablauf (34) für das gefilterte Medium (7) auf die mindestens eine Filterlage (33₁, 33₂,..., 33_{K}) folgt.

10. Filtrationsanordnung (30) nach Anspruch 9, wobei die mindestens eine Filterlage (33₁, 33₂,..., 33_{K}) aus einem einzigen Filterkörper (20) besteht, dessen Form an die innere Form des Filtergehäuses (31) durch Ausschneiden aus der Verbundvlieslage (10) angepasst ist und die Oberseite (11) und die Unterseite (12) der Verbundvlieslage (10) hat.

11. Filtrationsanordnung (30) nach Anspruch 10, wobei die mindestens eine Filterlage (33₁, 33₂,..., 33_{K}) aus einer Vielzahl von einzelnen geometrischen Filterkörpern (20) besteht und jeder Filterkörper (20) aus der Verbundvlieslage (10) geschnitten ist, eine kubische Form besitzt und die Oberseite (11) und die Unterseite (12) der Verbundvlieslage (10) hat.

12. Filtrationsanordnung (30) nach einem der Ansprüche 9 bis 11, wobei im Filtergehäuse (31) mehrere Filterlagen (33₁, 33₂,..., 33_{K}) vorgesehen sind und mindestens eine aus einer Verbundvlieslage (10) eines aus dem Filtermaterial (2) geschnittenen geometrischen Filterkörpers (20) besteht.

13. Filtrationsanordnung (30) nach Anspruch 12, wobei im Filtergehäuse (31) mindestens eine Filterlage (33₁, 33₂,..., 33_{K}) aus einzelnen kubischen Filterkörpern (20) und mindestens eine Filterlage (33₁, 33₂,..., 33_{K}) aus einem einzigen Filterkörper (20) besteht.

14. Filtrationsanordnung (30) nach Anspruch 13, wobei im Filtergehäuse (31) mindestens eine Filterlage (33₁, 33₂,..., 33_{K}) aus einzelnen kubischen Filterkörpern (20) oder mindestens eine Filterlage (33₁, 33₂,..., 33_{K}) aus einem einzigen Filterkörper (20) vorgesehen ist, wobei Aktivkohle in allen Vlieslagen (4₁, 4₂, ..., 4_{N}) der Verbundvlieslage (10) gebunden ist.

15. Filtrationsanordnung (30) nach einem der Ansprüche 9 bis 14, wobei die mindestens eine Filterlage (33₁, 33₂,..., 33_{K}) im Filtergehäuse (31) zwischen mindestens jeweils einer Gewebeschicht angeordnet ist.

## Claims

1. Filter material (2) for liquid media (7), wherein the filter material (2) consists of one or more geometric filter bodies (20),
**characterized in that**
the filter material (2) is constructed from a plurality of individual nonwoven layers (4₁, 4₂, ..., 4_{N}), wherein each nonwoven layer (4₁, 4₂, ..., 4_{N}) comprises a plurality of endless fibers (6) which are materially bonded to one another with other endless fibers (6) to a certain extent, and wherein endless fibers (6) of one nonwoven layer (4₁, 4₂, ..., 4_{N}) engage into adjacent nonwoven layers (4₁, 4₂, ..., 4_{N}) and are likewise connected to a certain extent to the endless fibers (6) of the adjacent nonwoven layers (4₁, 4₂, ..., 4_{N}) and form a composite nonwoven layer (10) with an upper side (11) and underside (12),
wherein the geometric filter bodies (20) are cut and separated from the composite nonwoven layer (10) and comprise the upper side (11) and underside (12) of the composite nonwoven layer (10).

2. Filter material (2) according to claim 1, wherein the cut geometric filter bodies (20) are elastically reversible and dimensionally stable in such a way that the filter bodies (20) can be stored in compressed form in a container (25) which can be evacuated and deformed, and the filter bodies (20), after pressure compensation of the container (25) with the environment, resume the shape which corresponds to the shape and size of the geometric filter bodies (20) cut from the composite nonwoven fabric layer (10).

3. Filter material (2) according to one of the preceding claims, wherein the endless fibers (6) are made of polyester.

4. Filter material (2) according to claim 3, wherein the endless fibers (6) consist of 60% to 90% of solid or hollow fibers and 40% to 10% of melt fibers.

5. Filter material (2) according to one of the preceding claims, wherein the endless fibers (6) of the filter material (2) have a fiber thickness of about 40 µm.

6. Filter material (2) according to one of the preceding claims, wherein the endless fibers (6) of the filter material (2) have a round and oval cross-sectional shape.

7. Filter material (2) according to one of the preceding claims, wherein the filter material (2) has a basis weight of 250-1800 grams/square meter.

8. Filter material (2) according to one of the preceding claims, wherein the endless fibers (6) of all nonwoven layers (4₁, 4₂, ..., 4_{N}) of the composite nonwoven layer (10) are mixed with activated carbon.

9. Filtration arrangement (30) for liquid media (7), comprising a filter housing (31) with an inlet (32) for the medium (7) to be filtered and an outlet (34) for the filtered medium (7), **characterized in that** at least one filter layer (33₁, 33₂, ..., 33_{K}) of at least one geometric filter body (20) cut from a composite nonwoven layer (10) of a filter material (2) according to one of claims 1 to 8 is provided in the filter housing (31), wherein the inlet (32) for the medium (7) to be filtered is directed onto the at least one filter layer (33₁, 33₂, ..., 33_{K}) and the outlet (34) for the filtered medium (7) follows the at least one filter layer (33₁, 33₂, ..., 33_{K}).

10. Filtration arrangement (30) according to claim 9, wherein the at least one filter layer (33₁, 33₂, ..., 33_{K}) consists of a single filter body (20), the shape of which is adapted to the inner shape of the filter housing (31) by cutting out of the composite nonwoven layer (10) and comprises the upper side (11) and the underside (12) of the composite nonwoven layer (10).

11. Filtration arrangement (30) according to claim 10, wherein the at least one filter layer (33₁, 33₂, ..., 33_{K}) consists of a plurality of individual geometric filter bodies (20) and each filter body (20) is cut out of the composite nonwoven layer (10), has a cubic shape and comprises the upper side (11) and the underside (12) of the composite nonwoven layer (10).

12. Filtration arrangement (30) according to one of claims 9 to 11, wherein a plurality of filter layers (33₁, 33₂, ..., 33_{K}) are provided in the filter housing (31) and at least one consists of a composite nonwoven layer (10) of a geometric filter body (20) cut from the filter material (2).

13. Filtration arrangement (30) according to claim 12, wherein in the filter housing (31) at least one filter layer (33₁, 33₂, ..., 33_{K}) consists of individual cubic filter bodies (20) and at least one filter layer (33₁, 33₂, ..., 33_{K}) consists of a single filter body (20).

14. Filtration arrangement (30) according to claim 13, wherein at least one filter layer (33₁, 33₂, ..., 33_{K}) consisting of individual cubic filter bodies (20) or at least one filter layer (33₁, 33₂, ..., 33_{K}) consisting of a single filter body (20) is provided in the filter housing (31), wherein activated carbon is bonded in all nonwoven layers (4₁, 4₂, ..., 4_{N}) of the composite nonwoven layer (10).

15. Filtration arrangement (30) according to one of claims 9 to 14, wherein the at least one filter layer (33₁, 33₂, ..., 33_{K}) is arranged in the filter housing (31) between at least one respective fabric layer.

## Revendications

1. Matériau filtrant (2) pour des matières liquides (7), lequel matériau filtrant (2) se compose d'un ou plusieurs corps de filtre géométriques (20),
**caractérisé en ce que** le matériau filtrant (2) se compose de plusieurs couches de non-tissé (4₁, 4₂..., 4_{N}) séparées, chaque couche de non-tissé (4₁, 4₂..., 4_{N}) comprenant une pluralité de fibres sans fin (6) qui sont reliées par solidarité de matière, dans une certaine mesure, avec d'autres fibres sans fin (6), des fibres sans fin (6) d'une couche de non-tissé (4₁, 4₂..., 4_{N}) se mettant en prise dans des couches de non-tissé (4₁, 4₂..., 4_{N}) voisines et étant également reliées dans une certaine mesure avec les fibres sans fin (6) des couches de non-tissé (4₁, 4₂..., 4_{N}) voisines et formant une couche de non-tissé composite (10) avec une face supérieure (11) et une face inférieure (12),
les corps de filtre géométriques (20) étant découpés dans la couche de non-tissé composite (10) et séparés et présentant la face supérieure (11) et la face inférieure (12) de la couche de non-tissé composite (10).

2. Matériau filtrant (2) selon la revendication 1, **caractérisé en ce que** les corps de filtre géométriques (20) découpés sont élastiques de façon réversible et de forme stable, de sorte que les corps de filtre (20) peuvent être stockés en étant comprimés dans un contenant (25) déformable dans lequel le vide peut être fait et les corps de filtre (20) reprennent, quand la pression du contenant (25) s'équilibre avec l'environnement, leur forme qui correspond à la forme et à la taille des corps de filtre géométriques (20) découpés dans la couche de non-tissé composite (10).

3. Matériau filtrant (2) selon l'une des revendications précédentes, dans lequel les fibres sans fin (6) sont en polyester.

4. Matériau filtrant (2) selon la revendication 3, dans lequel les fibres sans fin (6) se composent entre 60 % et 90 % de fibres pleines ou creuses et entre 40 % et 10 % de fibres fondues.

5. Matériau filtrant (2) selon l'une des revendications précédentes, dans lequel les fibres sans fin (6) du matériau filtrant (2) possèdent une grosseur de fibres d'environ 40 µm.

6. Matériau filtrant (2) selon l'une des revendications précédentes, dans lequel les fibres sans fin (6) possèdent une forme en section ronde ou ovale.

7. Matériau filtrant (2) selon l'une des revendications précédentes, dans lequel le matériau filtrant (2) présente un poids par unité de surface de 250 à 1800 grammes par mètre carré.

8. Matériau filtrant (2) selon l'une des revendications précédentes, dans lequel les fibres sans fin (6) de toutes les couches de non-tissé (4₁, 4₂..., 4_{N}) de la couche de non-tissé composite (10) sont additionnées de charbon actif.

9. Dispositif de filtre (30) pour des matières liquides (7), comprenant un logement de filtre (31) avec une entrée (32) pour la matière (7) à filtrer et une sortie (34) pour la matière (7) filtrée, **caractérisé en ce qu'**est prévue dans le logement de filtre (31) au moins une couche filtrante (33₁, 33₂..., 33_{K}) d'au moins un corps de filtre géométrique (20) découpé dans une couche de non-tissé composite (10) d'un matériau filtrant (2) selon l'une des revendications 1 à 8, l'entrée (32) pour la matière (7) à filtrer étant orientée vers l'au moins une couche filtrante (33₁, 33₂..., 33_{K}) et la sortie (34) pour la matière (7) filtrée lui faisant suite sur l'au moins une couche filtrante (33₁, 33₂..., 33_{K}).

10. Dispositif de filtre (30) selon la revendication 9, dans laquelle l'au moins une couche filtrante (33₁, 33₂..., 33_{K}) se compose d'un seul corps de filtre (20) dont la forme est adaptée à la forme intérieure du logement de filtre (31) par découpe dans la couche de non-tissé composite (10) et qui possède la face supérieure (11) et la face inférieure (12) de la couche de non-tissé composite (10).

11. Dispositif de filtre (30) selon la revendication 10, dans laquelle l'au moins une couche filtrante (33₁, 33₂..., 33_{K}) consiste d'une pluralité de corps de filtre géométriques (20) individuels et chaque corps de filtre (20) est découpé dans la couche de non-tissé composite (10), a une forme cubique et possède la face supérieure (11) et la face inférieure (12) de la couche de non-tissé composite (10).

12. Dispositif de filtre (30) selon l'une des revendications 9 à 11, dans laquelle sont prévues dans le logement de filtre (31) plusieurs couches filtrantes (33₁, 33₂..., 33_{K}) et au moins une se compose d'une couche de non-tissé composite (10) d'un corps de filtre géométrique (20) découpé dans le matériau filtrant (2).

13. Dispositif de filtre (30) selon la revendication 12, dans laquelle au moins une couche filtrante (33₁, 33₂..., 33_{K}) dans le logement de filtre (31) se compose de corps de filtre (20) cubiques séparés et au moins une couche filtrante (33₁, 33₂..., 33_{K}) se compose d'un seul corps de filtre (20).

14. Dispositif de filtre (30) selon la revendication 13, dans laquelle au moins une couche filtrante (33₁, 33₂..., 33_{K}) dans le logement de filtre (31) se compose de corps de filtre (20) cubiques séparés ou au moins une couche filtrante (33₁, 33₂..., 33_{K}) se compose d'un seul corps de filtre (20), du charbon actif étant lié dans toutes les couches de non-tissé (4₁, 4₂..., 4_{N}) de la couche de non-tissé composite (10).

15. Dispositif de filtre (30) selon l'une des revendications 9 à 14, dans laquelle l'au moins une couche filtrante (33₁, 33₂..., 33_{K}) dans le logement de filtre (31) est disposée entre au moins une couche de textile.
